# NEUE EUROPÄISCHE PATENTSCHRIFT

(11) **EP 2 580 257 B2**
(45) Veröffentlichungstag und Bekanntmachung des Hinweises auf die Entscheidung über den Einspruch: **15.02.2023**
(45) Hinweis auf die Patenterteilung: 04.03.2015
(21) Anmeldenummer: 11724644.7
(22) Anmeldetag: 14.06.2011
(51) Int. Cl.: C08F 220/18, C08F 2/22, C08F 212/08, D21H 19/58

(54) **POLYMERDISPERSIONEN AUS VINYLAROMATISCHEN VERBINDUNGEN UND ACRYLATMONOMEREN, HERGESTELLT IN GEGENWART VON SAATLATEX UND KOHLENHYDRATVERBINDUNGEN**
POLYMERIC DISPERSIONS FROM VINYLAROMATIC AND ACRYLIC MONOMERS PRODUCED IN THE PRESENCE OF SEEDLATEX AND CARBOHYDRATES
DISPERSIONS POLYMÉRIQUES SUR BASE DE MONOMÈRES VINYLAROMATIQUES ET ACRYLIQUES, PRODUITS EN PRÉSENCE DE GERMES DE LATEX ET D'HYDRATES DE CARBONE

(30) Priorität: 14.06.2010 EP 10165832
(43) Veröffentlichungstag der Anmeldung: 17.04.2013
(73) Patentinhaber: BASF SE, 67056 Ludwigshafen am Rhein (DE)
(72) Erfinder: SCHMIDT-THÜMMES, Jürgen, 67141 Neuhofen (DE); EVSTATIEVA, Elitsa, 67071 Ludwigshafen (DE); MOREL, Aurelie, F-75010 Paris (FR); LAWRENZ, Dirk, 67454 Haßloch (DE); SEYFFER, Hermann, 69123 Heidelberg (DE)
(74) Vertreter: BASF IP Association
(86) Internationale Anmeldenummer: PCT/EP2011/059779
(87) Internationale Veröffentlichungsnummer: WO 2011/157679

(56) Entgegenhaltungen:
- EP-A1- 0 536 597
- EP-A1- 0 536 597
- EP-A1- 0 567 812
- WO-A1-2009/047233
- WO-A1-2010/070205
- DE-A1- 3 922 784
- DE-A1- 19 650 790
- DE-A1- 19 810 903
- US-A1- 2004 034 147
- US-B1- 6 538 057
- HALE BERBER YAMAK: "Emulsion Polymerization: Effects of Polymerization Variables on the Properties of Vinyl Acetate Based Emulsion Polymers" In: Berber Hale Yamak: "Polymer Science", 2013 ISBN: 978-953-51-0941-9 pages 35-72,
- Römpp Chemie Lexikon Online; "Saatpolymerisation", März 2002
- Römpp Chemie Lexikon Online; "Emulsionspolymerisation", December 2009

## Beschreibung

Die Erfindung betrifft wässrige Polymerdispersionen und Verfahren zu deren Herstellung. Die Polymerdispersionen sind erhältlich durch radikalisch initiierte Emulsionspolymerisation von vinylaromatischen Verbindungen, bestimmten Acrylatmonomeren, ethylenisch ungesättigten Säuren und optional weiteren ethylenisch ungesättigten Monomeren, wobei die Emulsionspolymerisation in wässrigem Medium in Gegenwart von Initiatoren, Saatlatex sowie mindestens einer Kohlenhydratverbindung erfolgt.

Aus der EP-A 0 536 597 sind wässrige Polymerdispersionen bekannt, die erhältlich sind durch radikalische Emulsionspolymerisation von ungesättigten Monomeren in Gegenwart wenigstens eines Stärkeabbauprodukts, das durch Hydrolyse von nativer Stärke oder chemisch modifizierter Stärke in wässriger Phase hergestellt wird und ein gewichtsmittleres Molekulargewicht Mw von 2500 bis 25000 aufweist. Als ungesättigte Monomere setzt man beispielsweise Monomermischungen ein, die 50 bis 100 Gew.-% Ester der Acrylsäure und/oder Methacrylsäure mit 1 bis 12 C-Atome aufweisenden Alkoholen und/oder Styrol bzw. 70 bis 100 Gew.-% Styrol und/oder Butadien enthalten. Die Polymerdispersionen werden als Bindemittel, Klebstoff, Schlichtemittel für Fasern oder zur Herstellung von Überzügen verwendet. Diese Produkte können auf modernen, schnelllaufenden Papierstreichanlagen nicht befriedigen, da sie einen hohen Rakeldruck aufbauen.

Aus der WO 99/09251 ist ein Stärke-Copolymer-Produkt und ein Verfahren zu seiner Herstellung bekannt. Das Stärke-Copolymer-Produkt ist als Reaktionsprodukt von Stärke und mindestens einem Monomer, das radikalisch polymerisierbar ist, aufzufassen. Um wässrige Dispersionen solcher Produkte herzustellen, verwendet man eine wässrige Lösung oder Dispersion einer abgebauten Stärke, die in wässriger Lösung bei einer Temperatur von 25 °C eine intrinsische Viskosität η von 0,07 bis 0,35 dl/g hat. Die Polymerisation wird so geführt, dass man zu der auf Polymerisationstemperatur erwärmten wässrigen Lösung oder Dispersion der abgebauten Stärke zunächst einen Teil der Monomeren und des radikalischen Initiators zugibt und nach dem Anspringen der Polymerisation weitere Portionen an Monomeren und Initiator dosiert, wobei wenigstens 75% der gesamten Monomeren nach mehr als einer Stunde nach dem Initiieren der Polymerisation zugegeben werden. Die Dispersionen werden zur Herstellung von Überzügen und als Binder für Papierprodukte verwendet. Die Bindekraft solcher Produkte ist jedoch nicht ausreichend.

Aus der WO 2009/123637 sind Papierbeschichtungszusammensetzungen bekannt, welche ein Copolymer enthalten, dass hergestellt wird durch Polymerisation von ungesättigten Monomeren in Gegenwart von Kohlenhydraten mit einem Dextroseäquivalent von 10 bis 35.

Bekannte Bindemittel für Papierstreichmassen auf Basis von Copolymeren aus vinylaromatischen Verbindungen und weiteren Monomeren, hergestellt in Gegenwart von Kohlenhydratverbindungen sind noch nicht in jeder Hinsicht völlig zufriedenstellend. Bindemittel auf Basis von Styrol und Butadien haben den Nachteil, dass bei deren Herstellung unerwünschte Nebenprodukte entstehen können wie z.B. 4-Phenylcyclohexen (4-PCH), dem Diels-Alder-Additionsprodukt von Styrol und Butadien oder 4-Vinylcyclohexen (4-VCH), einem Butadiendimeren. Derartige Copolymere sind daher in Anwendungen, bei denen es auf besonders hohe Reinheit und Produktsicherheit ankommt wie z.B. die Herstellung von Nahrungsmittelverpackungen oder Getränkekartons nur eingeschränkt oder nach aufwändiger und kostenintensiver Reinigung verwendbar. Weitere wichtige Eigenschaften für einen Einsatz in Papierstreichmitteln sind eine möglichst hohe Rupffestigkeit, eine möglichst geringe Viskosität bei hoher Scherung und ein möglichst geringer Rakeldruck beim Aufbringen der Streichmasse auf eine Papierbahn.

Der Erfindung lag die Aufgabe zugrunde, wässrige Polymerdispersionen zur Verfügung zu stellen mit einer hohen Produktsicherheit, wobei die Dispersionen eine hohe Bindekraft, eine möglichst hohe Rupffestigkeit, eine möglichst geringe Viskosität bei hoher Scherung und einen möglichst geringen Rakeldruck beim Aufbringen einer Streichmasse auf eine Papierbahn aufweisen sollten.

Die Aufgabe wird erfindungsgemäß gelöst mit einer wässrigen Polymerdispersion, die erhältlich ist durch radikalisch initiierte Emulsionspolymerisation von
(a) 19,9 bis 80 Gew.-Teilen mindestens einer vinylaromatischen Verbindung,
(b) 19,9 bis 80 Gew.-Teilen mindestens eines Acrylatmonomers ausgewählt aus C1- bis C10-Alkylacrylaten und C1- bis C10-Alkylmethacrylaten,
(c) 0,1 bis 10 Gew.-Teilen mindestens einer ethylenisch ungesättigten Säure und
(d) 0 bis 20 Gew.-Teilen mindestens eines anderen ethylenisch ungesättigten Monomeren, wobei die Summe der Gew.-Teile der Monomeren (a), (b), (c) und (d) 100 beträgt, und wobei die Emulsionspolymerisation in wässrigem Medium in Gegenwart von Radikale bildenden Initiatoren, Saatlatex sowie mindestens einer Kohlenhydratverbindung in Form einer abgebauten Stärke erfolgt, wobei der Saatlatex in einer Menge von 0,1 bis 4 Gew.% bezogen auf die Gesamtmenge an Monomeren eingesetzt wird, wobei der Saatlatex eine Polystyrol-Polymersaat oder eine Polymethylmethacrylat-Polymersaat ist.

Gegenstand der Erfindung ist auch ein Verfahren zur Herstellung von wässrigen Polymerdispersionen auf Basis von Copolymerisaten aus Vinylaromaten und Acrylatmonomeren durch Emulsionspolymerisation der Monomeren in wässrigem Medium in Gegenwart einer Kohlenhydratverbindung und von Radikale bildenden Initiatoren, dadurch gekennzeichnet, dass man bei der radikalisch initiierten Emulsionspolymerisation
(a) 19,9 bis 80 Gew.-Teile mindestens einer vinylaromatischen Verbindung,
(b) 19,9 bis 80 Gew.-Teile mindestens eines Acrylatmonomers ausgewählt aus C1- bis C10-Alkylacrylaten und C1- bis C10-Alkylmethacrylaten,
(c) 0,1 bis 10 Gew.-Teile mindestens einer ethylenisch ungesättigten Säure und
(d) 0 bis 20 Gew.-Teile mindestens eines anderen ethylenisch ungesättigten Monomeren, wobei die Summe der Gew.-Teile der Monomeren (a), (b), (c) und (d) 100 beträgt, einsetzt, und wobei die Emulsionspolymerisation in wässrigem Medium in Gegenwart von Radikale bildenden Initiatoren, Saatlatex sowie mindestens einer Kohlenhydratverbindung in Form einer abgebauten Stärke erfolgt, wobei der Saatlatex in einer Menge von 0,1 bis 4 Gew.% bezogen auf die Gesamtmenge an Monomeren eingesetzt wird, wobei der Saatlatex eine Polystyrol-Polymersaat oder eine Polymethylmethacrylat-Polymersaat ist.

Vinylaromatische Verbindungen werden als Monomere in einer Menge von 19,9 bis 80 Gew.-Teilen, vorzugsweise 25 bis 70 Gew.-Teile und insbesondere 25 bis 60 Gew.-Teile, bezogen auf 100 Gew.-Teile Monomere eingesetzt. Vinylaromatische Verbindungen sind z.B. Styrol, α-Methylstyrol und Vinyltoluol. Bevorzugt sind Styrol, Methylstyrol und deren Gemisch. Besonders bevorzugt wird Styrol verwendet.

Acrylatmonomere werden in einer Menge von 19,9 bis 80 Gew.-Teilen, vorzugsweise 25 bis 70 Gew.-Teile und insbesondere 25 bis 60 Gew.-Teile bezogen auf 100 Gew.-Teile Monomere eingesetzt. Die Acrylatmonomere sind ausgewählt aus C1- bis C10-Alkylacrylaten und C1- bis C10-Alkylmethacrylaten. Es handelt sich hierbei um Ester der Acrylsäure und der Methacrylsäure mit einwertigen C1- bis C10-Alkoholen wie z.B. Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, sec.-Butylacrylat. sec.-Butylmethacrylat, tert.-Butylacrylat, tert.-Butylmethacrylat, Pentylacrylate, Pentylmethacrylate, 2-Ethylhexylacrylat, 2-Ethylhexylmethacrylat oder Propylheptylacrylat. Bevorzugt sind die Acrylatmonomere ausgewählt aus C1- bis C8-Alkylacrylaten und C1- bis C8-Alkylmethacrylaten, insbesondere aus Methylacrylat, Ethylacrylat, n-Butylacrylat, Ethylhexylacrylat, Propylheptylacrylat und deren Gemisch. Besonders bevorzugt ist n-Butylacrylat.

Ethylenisch ungesättigte Säuren werden als Monomere in einer Menge von 0,1 bis 10 Gew.-Teilen, vorzugsweise 0,2 bis 8 Gew.-Teilen oder 1 bis 6 Gew.-Teilen, bezogen auf 100 Gew.-Teile Monomere eingesetzt. Ethylenisch ungesättigte Säuren sind z.B. ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende α,β-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Die ethylenisch ungesättigten Säuren können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

Optional können noch weitere, von den bisher genannten Monomeren verschiedene ethylenisch ungesättigte Verbindungen eingesetzt werden. Die weiteren Monomere können in Mengen von 0 bis 20 Gew.-Teilen, beispielsweise in einer Menge von 0,1 bis 15 Gew.-Teilen oder von 0,5 bis 10 Gew.-Teilen auf 100 Gew.-Teile der Monomermischungen eingesetzt werden. Weitere Monomere sind beispielsweise ungesättigte Nitrile wie z.B. Acrylnitril und Methacrylnitril; ethylenisch ungesättigte Carbonsäureamide wie z.B. Acrylamid und Methacrylamid; Vinylester von gesättigten C1- bis C18-Carbonsäuren, wie z.B. Vinylacetat; Allylester gesättigter Carbonsäuren, Vinylether, Vinylketone, Dialkylester ethylenisch ungesättigter Dicarbonsäuren, N-Vinylpyrrolidon, N-Vinylpyrrolidin, N-Vinylformamid, N,N-Dialkylaminoalkylacrylamide, N,N-Dialkylaminoalkylmethacrylamide, N,N-Dialkylaminoalkylacrylate, N,N-Dialkylaminoalkylmeth-acrylate, Vinylchlorid und Vinylidenchlorid.

Die weiteren Monomere sind vorzugsweise monoethylenisch ungesättigt. Es können aber auch mehrfach ungesättigte Monomere, insbesondere vernetzende Monomere mit zwei oder mehr ethylenischen Doppelbindungen eingesetzt werden, z.B. Alkandioldiacrylate, beispielsweise Butandioldiacrylat.

Vorzugweise werden
(a) 25 bis 70 Gew.-Teile Styrol und/oder Methylstyrol,
(b) 25 bis 70 Gew.-Teile mindestens eines Acrylatmonomers ausgewählt aus C1- bis C8-Alkylacrylaten,
(c) 1 bis 6 Gew.-Teile mindestens einer ethylenisch ungesättigten Säure ausgewählt aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat und Sulfopropylmethacrylat und
(d) 0 bis 20 Gew.-Teilen mindestens eines anderen ethylenisch ungesättigten Monomeren, eingesetzt, wobei die Summe der Gew.-Teile der Monomeren (a), (b), (c) und (d) 100 beträgt.

In einer Ausführungsform werden
(a) 25 bis 60 Gew.-Teile Styrol,
(b) 25 bis 60 Gew.-Teile n-Butylacrylat,
(c) 1 bis 6 Gew.-Teile Acrylsäure und
(d) 0 bis 20 Gew.-Teilen mindestens eines anderen ethylenisch ungesättigten Monomeren, eingesetzt, wobei die Summe der Gew.-Teile der Monomeren (a), (b), (c) und (d) 100 beträgt.

Bei der Emulsionspolymerisation setzt man vorzugsweise 15 bis 60 Gew.-Teile, 20 bis 50 Gew.-Teile, oder 30 bis 45 Gew.-Teile der Kohlenhydratverbindung auf 100 Gew.-Teile der zu polymerisierenden Monomere ein. Als Ausgangstärken zur Herstellung der erfindungsgemäß zu verwendenden abgebauten Stärken eignen sich alle nativen Stärken wie Stärken aus Mais, Weizen, Hafer, Gerste, Reis, Hirse, Kartoffeln, Erbsen, Tapioka, Sorghum oder Sago. Von Interesse sind außerdem solche natürlichen Stärken, die einen hohen Amylopektingehalt aufweisen wie Wachsmaisstärke und Wachskartoffelstärke. Der Amylopektingehalt dieser Stärken liegt oberhalb von 90 %, meistens bei 95 bis 100 %. Auch chemisch durch Veretherung oder Veresterung modifizierte Stärken können zur Herstellung der erfindungsgemäßen Polymerdispersionen eingesetzt werden. Solche Produkte sind bekannt und im Handel erhältlich. Sie werden beispielsweise durch Veresterung von nativer Stärke oder abgebauter nativer Stärke mit anorganischen oder organischen Säuren, deren Anhydriden oder Chloriden hergestellt. Von besonderem Interesse sind phosphatierte und acetylierte abgebaute Stärken. Die gängigste Methode zur Veretherung von Stärken besteht in der Behandlung von Stärke mit organischen Halogenverbindungen, Epoxiden oder Sulfaten in wässriger alkalischer Lösung. Bekannte Stärkeether sind Alkylether, Hydroxyalkylether, Carboxyalkylether und Allylether. Außerdem eignen sich die Umsetzungsprodukte von Stärken mit 2,3-Epoxipropyltrimethylammoniumchlorid. Besonders bevorzugt sind abgebaute native Stärken, insbesondere zu Maltodextrin oder zu Glucosesirup abgebaute native Stärken. Weitere geeignete Stärken sind kationisch modifizierte Stärken, d.h. Stärkeverbindungen, welche Aminogruppen oder Ammoniumgruppen aufweisen. Der Abbau der Stärken kann enzymatisch, oxidativ oder hydrolytisch durch Einwirkung von Säuren oder Basen erfolgen. Abgebaute Stärken sind im Handel erhältlich. Man kann jedoch auch eine natürliche Stärke beispielsweise zunächst enzymatisch in wässrigem Medium abbauen und nach dem Abstoppen des enzymatischen Abbaus in der so erhaltenen wässrigen Lösung bzw. Dispersion der abgebauten Stärke die Emulsionspolymerisation der Monomeren erfindungsgemäß durchführen. Die abgebauten Stärken haben beispielsweise eine intrinsische Viskosität ηi von weniger als 0,07 dl/g oder weniger als 0,05 dl/g. Die intrinsische Viskosität ηi der abgebauten Stärken liegt vorzugsweise in dem Bereich von 0,02 bis 0,06 dl/g. Die intrinsische Viskosität ηi wird bestimmt gemäß DIN EN1628 bei einer Temperatur von 23 °C.

Eine alternative und in der Praxis sehr geläufige Größe zur Charakterisierung des Abbaugrades von Stärken ist der DE- Wert. DE steht für Dextrose Equivalent und bezeichnet den prozentualen Anteil reduzierender Zucker an der Trockensubstanz. Es entspricht der Menge Glucose (= Dextrose), die je 100 g Trockensubstanz das gleiche Reduktionsvermögen hätte. Der DE-Wert ist ein Maß dafür, wie weit der Polymerabbau erfolgt ist, daher erhalten Produkte mit niedrigem DE-Wert einen hohen Anteil an Polysacchariden und einen niedrigen Gehalt an niedermolekularen Zuckern, während Erzeugnisse mit hohem DE-Wert hauptsächlich nur noch aus niedermolekularen Zuckern bestehen. Bevorzugte Maltodextrine weisen intrinsische Viskositäten im Bereich von größer oder gleich ca. 0,04 bis 0,06 dl/g, DE-Werte von 3 bis 20 und Molmassen M_{w} von 15000 bis 20000 g/Mol auf. Bevorzugter Glucosesirup weist intrinsische Viskositäten im Bereich von 0,02 bis 0,04 dl/g, DE-Werte von 20 bis 30 und Molmassen M_{w} von 3000 bis 6000 g/Mol auf. Herstellungsbedingt fallen diese Produkte in Form wässriger Lösungen an und werden auch als solche in den Handel gebracht. Geeignete Lösungen von Maltodextrinen weisen Feststoffgehalte von 50 bis 70%, geeignete Lösungen von Glucosesirup Feststoffgehalte von 70 bis 95% auf. Insbesondere Maltodextrine sind jedoch auch in sprühgetrockneter Form als Pulver erhältlich.

Die erfindungsgemäßen Polymerdispersionen werden hergestellt durch Polymerisation der oben genannten Monomere in Gegenwart von Saatlatex. Saatlatex wird eingesetzt in einer Menge von 0,1 bis 4 Gew.%, besonders bevorzugt von 1 bis 3 Gew.%, bezogen auf die Gesamtmenge an Monomeren.

Der gewichtsmittlere Teilchendurchmesser der eingesetzten Polymersaat beträgt vorzugsweise kleiner oder gleich 80 nm oder kleiner oder gleich 60 nm und insbesondere kleiner oder gleich 50 nm oder kleiner oder gleich 40 nm, z.B. 20 bis 40 nm. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere D_{w50}-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Vorteilhaft ist es, wenn die verwendete Polymersaat monomodal ist und eine enge Teilchengrößenverteilung aufweist. Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser D_{w50} und zahlenmittleren Teilchendurchmesser D_{N50} [D_{w50}/D_{N50}] kleiner oder gleich 2,0, bevorzugt kleiner oder gleich 1,5 und insbesondere bevorzugt kleiner oder gleich 1,2 oder kleiner oder gleich 1,1 ist. Üblicherweise wird die Polymersaat in Form einer wässrigen Polymerdispersion eingesetzt. Die vorgenannten Mengenangaben beziehen sich dabei auf den Polymerfeststoffanteil der wässrigen Polymersaatdispersion; sie sind daher als Gew.-Teile Polymersaatfeststoff, bezogen auf 100 Gew.-Teile Monomere angegeben. Die Herstellung einer Polymersaat ist dem Fachmann bekannt und erfolgt üblicherweise dergestalt, dass eine relativ kleine Menge an Monomeren sowie eine relativ große Menge an Emulgatoren gemeinsam mit entionisiertem Wasser in einem Reaktionsgefäß vorgelegt und bei Reaktionstemperatur eine ausreichende Menge an Polymerisationsinitiator zugegeben wird. Erfindungsgemäß bevorzugt wird eine Polymersaat mit einer Glasübergangstemperatur größer oder gleich 50 °C, größer oder gleich 60 °C, größer oder gleich 70 °C, größer oder gleich 80 °C oder größer oder gleich 90°C eingesetzt. Erfindungsgemäß einzusetzen ist eine Polystyrol- oder eine Polymethylmethacrylat-Polymersaat.

Im erfindungsgemäßen Verfahren kann die Gesamtmenge oder eine Teilmenge der Polymersaat im Polymerisationsreaktor vorgelegt und die gegebenenfalls verbliebene Restmenge im Laufe der Emulsionspolymerisation zugegeben werden. Vorzugsweise wird die Gesamtmenge an Polymersaat vor Initiierung der Polymerisation im Polymerisationsreaktor vorgelegt.

In einer Ausführungsform des erfindungsgemäßen Verfahrens legt man zusammen mit der Kohlenhydratverbindung und dem Saatlatex mindestens 15 Gew.-% des Initiators in dem wässrigen Medium vor, wobei die Monomeren und die restlichen Initiatoren unter Polymerisationsbedingungen in diese Vorlage dosiert werden. Es können auch zusätzlich zu Initiator und Saatlatex 1 bis 10 Gew.-% der insgesamt zu polymerisierenden Monomeren in der Vorlage vorgelegt werden. Die restlichen Monomeren und der restliche Initiator werden dann nach dem Anspringen der Polymerisation unter Polymerisationsbedingungen, jedoch getrennt voneinander, zur Vorlage dosiert. Unter Polymerisationsbedingungen soll verstanden werden, dass das Reaktionsgemisch in der Vorlage auf die erforderliche Temperatur erhitzt worden ist, bei der die Polymerisation abläuft. Diese Temperaturen betragen beispielsweise 80 bis 130 °C, vorzugsweise 90 bis 120 °C. Die Polymerisation kann auch unter Druck durchgeführt werden, z.B. bei Drücken bis zu 15 bar, z.B. bei 2 bis 10 bar.

Bei dem erfindungsgemäßen Verfahren verwendet man üblicherweise Initiatoren, die unter den Reaktionsbedingungen Radikale bilden. Geeignete Polymerisationsinitiatoren sind z.B. Peroxide, Hydroperoxide, Wasserstoffperoxid, Natrium- oder Kaliumpersulfat, Redoxkatalysatoren und Azoverbindungen wie 2,2-Azobis(4-methoxy-2,4-dimethylvaleronitril), 2,2-Azobis(2,4-dimethylvaleronitril) und 2,2-Azobis(2-amidinopropan)dihydrochlorid. Beispiele für weitere geeignete Initiatoren sind Dibenzoylperoxid, tert.-Butylperpivalat, tert.-Butyl-per-2-ethylhexanoat, Di-tert.-butylperoxid, Diamylperoxid, Dioctanoylperoxid, Didecanoylperoxid, Dilauroylperoxid, Bis(o-toluyl)peroxid, Succinylperoxid, tert.-Butalperacetat, tert.-Butylpermaleinat, tert.-Butylperisobutyrat, tert.-Butylperpivalat, tert.-Butylperoctoat, tert.-Butylperbenzoat, tert.-Butylhydroperoxid, Azo-bis-isobutyronitril, 2,2'-Azo-bis-(2-methylbutyronitril), 2,2'-Azobis(2,4-dimethylvaleronitril) und 2,2'-Azobis(N,N'-dimethylenisobutyroamidin)dihydrochlorid. Bevorzugt sind Initiatoren ausgewählt aus der Gruppe der Peroxodisulfate, Peroxosulfate, Azoinitiatoren, organischen Peroxide, organischen Hydroperoxide und Wasserstoffperoxid. Besonders bevorzugt werden wasserlösliche Initiatoren eingesetzt, z. B. Natriumpersulfat, Kaliumpersulfat, Ammoniumpersulfat, Natriumperoxodisulfat, Kaliumperoxodisulfat und/oder Ammoniumperoxodisulfat. Man kann die Polymerisation auch mit Hilfe energiereicher Strahlen wie Elektronenstrahlen oder durch Bestrahlen mit UV-Licht initiieren.

Die Initiatoren werden beispielsweise in Mengen bis zu 2 Gew.-%, vorzugsweise zu mindestens 0,9 Gew.-%, z. B. von 1,0 bis 1,5 Gew.-%, bezogen auf die zu polymerisierenden Monomeren, eingesetzt. Vorzugsweise werden mindestens 15 Gew.-% der Initiatoren zusammen mit der Kohlehydratverbindung und dem Saatlatex in dem wässrigen Medium vorgelegt und die Monomeren sowie die restlichen Initiatoren werden unter Polymerisationsbedingungen in diese Vorlage dosiert.

Um die erfindungsgemäßen Polymerdispersionen herzustellen, legt man beispielsweise in einem beheizbaren Reaktor, der mit einer Mischvorrichtung ausgestattet ist, eine wässrige Lösung der oben beschriebenen Kohlenhydratverbindung, Saatlatex und vorzugsweise mindestens 15 Gew.-% der insgesamt benötigten Initiatormenge vor. Die Menge an Initiator in der Vorlage beträgt vorzugsweise höchstens 90 Gew.-%, meistens nicht mehr als 60 Gew.-% der insgesamt zum Polymerisieren der Monomeren erforderlichen Menge. Die Kohlehydratverbindung bewirkt eine gute Dispergierung der Monomeren und eine Stabilisierung der entstehenden feinteiligen Polymeren. Bei der Emulsionspolymerisation erfolgt zumindest eine teilweise Pfropfung der Kohlehydratverbindung, die dadurch fest in das entstehende Polymer eingebaut wird.

Um die Dispergierung der Monomeren in dem wässrigen Medium zu unterstützen, kann man die üblicherweise als Dispergiermittel eingesetzten Schutzkolloide und/oder Emulgatoren verwenden. Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol , insbesondere von 5000 bis 50000 g/mol.

Geeignete Emulgatoren sind beispielsweise ethoxylierte C8- bis C36-Fettalkohole mit einem Ethoxylierungsgrad von 3 bis 50, ethoxylierte Mono-, Di- und Tri- C4- bis C12- Alkylphenole mit einem Ethoxylierungsgrad von 3 bis 50, Alkalimetallsalze von Dialkylestern der Sulfobernsteinsäure, Alkalimetall- und Ammoniumsalze von C8- bis C12-Alkylsulfaten, Alkalimetall- und Ammoniumsalze von C12- bis C18-Alkylsulfonsäuren und Alkalimetall- und Ammoniumsalze von C9- bis C18-Alkylarylsulfonsäuren. Kationaktive Emulgatoren sind z.B. Verbindungen mit mindestens einer Amino- oder Ammoniumgruppe und mindestens einer C8-C22-Alkylgruppe. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren.

Um die Eigenschaften der Polymeren zu modifizieren, kann man die Emulsionspolymerisation gegebenenfalls in Gegenwart mindestens eines Polymerisationsreglers durchführen. Beispiele für Polymerisationsregler sind organische Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff. Weitere Polymerisationsregler sind Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation einen Regler einsetzt, so beträgt die jeweils verwendete Menge beispielsweise 0,01 bis 5, vorzugsweise 0,1 bis 1 Gew.-%, bezogen auf die bei der Polymerisation eingesetzten Monomeren. Die Regler werden vorzugsweise zusammen mit den Monomeren in die Vorlage dosiert. Sie können jedoch auch teilweise oder vollständig in der Vorlage anwesend sein. Sie können auch stufenweise gegenüber den Monomeren versetzt zudosiert werden

Die Emulsionspolymerisation erfolgt in einem wässrigen Medium. Hierbei kann es sich z. B. um vollständig entsalztes Wasser handeln oder auch um Mischungen aus Wasser und einem damit mischbaren Lösemittel wie Methanol, Ethanol oder Tetrahydrofuran. Um die Monomeren zu polymerisieren, bereitet man zunächst eine wässrige Lösung der abgebauten Stärke. Diese Lösung kann gegebenenfalls ein Schutzkolloid und/oder einen Emulgator in gelöster Form enthalten. Die als Vorlage benutzte wässrige Lösung wird vorzugsweise auf die Temperatur erhitzt, bei der die Polymerisation der Monomeren erfolgen soll oder auf eine Temperatur, die beispielsweise 5 bis 20 °C unterhalb der Polymerisationstemperatur liegt, bevor der vorzulegende Anteils des Initiators in die Vorlage gegeben wird. Der zwingend erforderliche Saatlatex kann wahlweise entweder in die kalte oder in die aufgeheizte Vorlage eingegeben werden, in letzterem Fall vorzugsweise vor Zugabe der Initiatorvorlage. Sobald die jeweils gewünschte Polymerisationstemperatur erreicht ist oder innerhalb einer Zeitspanne von 1 bis 15 Minuten, vorzugsweise 5 bis 15 Minuten nach dem Erreichen der Polymerisationstemperatur beginnt man mit dem Dosieren der Monomeren. Sie können beispielsweise kontinuierlich innerhalb von beispielsweise 60 Minuten bis zu 10 Stunden, meistens innerhalb von 2 bis 4 Stunden in den Reaktor gepumpt werden. Auch eine stufenweise erfolgende Zugabe der Monomeren ist möglich.

Nach Abschluss der Polymerisation kann man gegebenenfalls weiteren Initiator zum Reaktionsgemisch zugeben und eine Nachpolymerisation bei gleicher, niedrigerer oder auch höherer Temperatur wie bei der Hauptpolymerisation durchführen. Um die Polymerisationsreaktion zu vervollständigen reicht es in den meisten Fällen, das Reaktionsgemisch nach Zugabe sämtlicher Monomeren noch beispielsweise 1 bis 3 Stunden bei der Polymerisationstemperatur zu rühren.

Der pH-Wert kann bei der Polymerisation beispielsweise 1 bis 5 betragen. Nach der Polymerisation wird der pH-Wert beispielsweise auf einen Wert zwischen 6 und 7 eingestellt. Man erhält praktisch koagulatfreie wässrige Dispersionen.

Man erhält eine wässrige Polymerdispersion, deren dispergierte Teilchen einen mittleren Teilchendurchmesser von vorzugsweise 80 bis 160 nm, insbesondere 90 bis 150 nm aufweisen. Der mittlere Teilchendurchmesser der Polymerteilchen kann durch dynamische Lichtstreuung an einer 0,005 bis 0,01 gew.-%igen wässrigen Polymerdispersion bei 23°C mit Hilfe eines Autosizers IIC der Fa. Malvern Instruments, England, ermittelt werden. Die Angaben beziehen sich jeweils auf den mittleren Durchmesser der Kumulantenauswertung (cumulant z-average) der gemessenen Autokorrelationsfunktion gemäß IOS-Norm 13321.

In einer Ausführungsform beträgt der Feststoffgehalt der erfindungsgemäßen wässrigen Polymerdispersion mehr als 55 Gew.-% z.B. mindestens 60 Gew.-%. Ein entsprechend hoher Feststoffgehalt kann z.B. durch entsprechende Einstellung der bei der Emulsionspolymerisation eingesetzten Wassermenge und/oder der Monomermengen erfolgen.

Die erfindungsgemäßen wässrigen Polymerdispersionen können als Bindemittel, Klebstoff, Schlichtemittel für Fasern, zur Herstellung von Überzügen oder zur Herstellung von Papierstreichmassen verwendet werden. Die erfindungsgemäßen wässrigen Polymerdispersionen eignen sich sowohl zum Schlichten von Textilfasern und auch zum Schlichten von Mineralfasern, insbesondere Glasfasern. Aufgrund ihrer guten Klebkraft, insbesondere bei Verwendung von Comonomeren, welche zu einer niedrigen Glasübergangstemperatur des Copolymers (z. B. kleiner 20°C) führen, kann man sie außerdem als Klebstoff und zur Herstellung von Überzügen verwenden. Bevorzugt werden die erfindungsgemäßen wässrigen Polymerdispersionen als Bindemittel in Papierstreichmassen eingesetzt.

Ein Gegenstand der Erfindung ist auch eine Papierstreichmasse, enthaltend
(i) anorganische Pigmente und
(ii) eine oben beschriebene, erfindungsgemäße wässrige Polymerdispersion und optional weitere Zusatzstoffe.

Papierstreichmassen enthalten neben Wasser im allgemeinen Pigmente, Bindemittel und Hilfsmittel zur Einstellung der erforderlichen rheologischen Eigenschaften, z. B. Verdicker. Die Pigmente sind üblicherweise in Wasser dispergiert. Die Papierstreichmasse enthält Pigmente in einer Menge von vorzugsweise mindestens 80 Gew.-%, z. B. 80 bis 95 Gew.-% oder 80 bis 90 Gew.-%, bezogen auf den Gesamtfeststoffgehalt. In Betracht kommen insbesondere Weißpigmente. Geeignete Pigmente sind beispielsweise Metallsalzpigmente wie z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb^{®} 60, Hydrocarb^{®} 60 oder Hydrocarb^{®} 90 ME. Weitere Geeignete Pigmente sind z.B. Kieselsäuren, Aluminiumoxide, Aluminiumhydrat, Silikate, Titandioxid, Zinkoxid, Kaolin, Tonerde, Talkum oder Siliziumdioxid. Geeignete weitere Pigmente sind z.B. verfügbar als Capim^{®} MP 50 (Clay), Hydragloss^{®} 90 (Clay) oder Talcum C10.

Die Papierstreichmasse enthält mindestens ein Bindemittel. Die erfindungsgemäß hergestellte Polymerdispersion kann in der Papierstreichmasse als alleiniges Bindemittel oder in Kombination mit weiteren Bindemitteln eingesetzt werden. Die wichtigsten Aufgaben von Bindemitteln in Papierstreichmassen sind, die Pigmente an das Papier und die Pigmente untereinander zu verbinden und teilweise Hohlräume zwischen Pigmentpartikeln aufzufüllen. Auf 100 Gew.-Teile Pigmente verwendet man beispielsweise 1 bis 50 Gew.-Teile, vorzugsweise 1 bis 25 Gew.-Teile oder 5 bis 20 Gew.-Teile eines organischen Bindemittels (fest, d.h. ohne Wasser oder sonstige bei 21 °C, 1 bar flüssige Lösemittel).

Als weitere Bindemittel in Betracht kommen Bindemittel auf natürlicher Basis, insbesondere Bindemittel auf Stärkebasis sowie von den erfindungsgemäß hergestellten Polymerisaten verschiedene, synthetische Bindemittel, insbesondere durch Emulsionspolymerisation herstellbare Emulsionspolymerisate. Unter Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Getreidestärke.

Die weiteren, von den erfindungsgemäß hergestellten Polymerisaten verschiedenen, synthetischen Bindemittel bestehen vorzugsweise zu mindestens 40 Gew.-%, bevorzugt zu mindestens 60 Gew.-%, besonders bevorzugt zu mindestens 80 Gew.-% aus so genannten Hauptmonomeren. Die Hauptmonomeren sind ausgewählt aus C1-C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren. Zu nennen sind z. B. (Meth)acrylsäurealkylester mit einem C1-C10-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, α- und p-Methylstyrol, α-Butyl-styrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere sind C1-C10-Alkyl(meth)acrylate und Mischungen der Alkyl(meth)acrylate mit Vinylaromaten, insbesondere Styrol, oder Kohlenwasserstoffe mit 2 Doppelbindungen, insbesondere Butadien, oder Gemische von derartigen Kohlenwasserstoffen mit Vinylaromaten, insbesondere Styrol. Bei Gemischen von aliphatischen Kohlenwasserstoffen (insbesondere Butadien) mit Vinylaromaten (insbesondere Styrol) kann das Verhältnis z. B. zwischen 10:90 bis 90:10, insbesondere 20:80 bis 80:20 liegen. Besonders bevorzugte Hauptmonomere sind Butadien und die vorstehenden Mischungen von Butadien und Styrol.

Neben den Hauptmonomeren kann das als Bindemittel geeignete Emulsionspolymerisat weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Der Gehalt an ethylenisch ungesättigten Säuren im Emulsionspolymerisat ist im Allgemeinen kleiner 10 Gew.-%, vorzugsweise kleiner 8 Gew.-% und mindestens 0,1 Gew.% oder mindestens 1 Gew.%. Weitere Monomere sind z. B. auch Hydroxylgruppen enthaltende Monomere, insbesondere C1-C10-Hydroxyalkyl(meth)acrylate, oder Amide wie (Meth)acrylamid.

Bei Verwendung von synthetischen Bindemitteln können auch natürliche Bindemittel wie Stärke mit verwendet werden, sind jedoch nicht zwingend erforderlich.

Erfindungsgemäße Papierstreichmassen können zusätzlich weitere Zusatz- und Hilfsstoffe enthalten, z.B. Füllstoffe, Co-Bindemittel und Verdicker zur weiteren Optimierung von Viskosität und Wasserretention, optische Aufheller, Dispergatoren, Tenside, Gleitmittel (z.B. Calciumstearat und Wachse), Neutralisationsmittel (z.B. NaOH oder Ammoniumhydroxid) zur pH-Werteinstellung, Entschäumer, Entlüftungsmittel, Konservierungsmittel (z.B. Biocide), Verlaufshilfsmittel, Farbstoffe (insbesondere lösliche Farbstoffe) etc. Als Verdicker kommen neben synthetischen Polymerisaten (z.B. vernetztes Polyacrylat), insbesondere Cellulosen, vorzugsweise Carboxymethylcellulose in Betracht. Optische Aufheller sind z.B. Fluoreszenz- oder Phosphoreszensfarbstoffe, insbesondere Stilbene.

Es handelt sich vorzugsweise um eine wässrige Papierstreichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Papierstreichmassen liegen im Bereich von 30 bis 70 Gew.-%. Der pH Wert der Papierstreichmasse wird vorzugsweise auf Werte von 6 bis 10, insbesondere 7 bis 9,5 eingestellt.

Eine Ausführungsform der Erfindung betrifft eine Papierstreichmasse, wobei die Polymerisate der erfindungsgemäß hergestellten wässrigen Polymerdispersion in einer Menge von 1 bis 50 Gew.-Teilen, bezogen auf die Gesamtmenge an Pigmenten, eingesetzt werden und wobei die Pigmente in einer Menge von 80 bis 95 Gewichtsteilen, bezogen auf den Gesamtfeststoffgehalt, enthalten sind und ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und wobei die Papierstreichmasse zusätzlich mindestens einen Hilfsstoff enthält, ausgewählt aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

Gegenstand der Erfindung ist auch mit einer erfindungsgemäßen Papierstreichmasse beschichtetes Papier oder Karton und ein Verfahren zum Streichen von Papier oder Karton, wobei
- eine erfindungsgemäße wässrige Polymerdispersion zur Verfügung gestellt wird; und
- mit dieser Polymerdispersion, mindestens einem Pigment und optionalen weiteren Hilfsstoffen eine Papierstreichmasse hergestellt wird; und die Papierstreichmasse auf mindestens eine Oberfläche von Papier oder Karton aufgebracht wird.

Die Papierstreichmasse wird vorzugsweise auf unbeschichtete Rohpapiere oder unbeschichteten Karton aufgetragen. Die Menge beträgt im allgemeinen 1 bis 50 g, vorzugsweise 5 bis 30 g (fest, d. h. ohne Wasser oder sonstige bei 21 °C, 1 bar flüssige Lösemittel) pro Quadratmeter. Die Beschichtung kann durch übliche Auftragverfahren erfolgen, z.B. mittels Leimpresse, Filmpresse, Bladecoater, Luftbürste, Rakel, Vorhangstreichverfahren (curtain coating) oder Spray-Coater. Je nach Pigmentsystem können die erfindungsgemäßen Papierstreichmassen für den Grundstrich und/oder für den Deckstrich verwendet werden.

Erfindungsgemäße Papierstreichmassen haben gute anwendungstechnische Eigenschaften. Sie haben eine hohe Bindekraft, eine hohe Rupffestigkeit, eine geringe Viskosität bei hoher Scherung und einen geringen Rakeldruck beim Aufbringen einer Streichmasse auf eine Papierbahn. Sie sind in den üblichen Druckverfahren, wie Hochdruck, Tiefdruck, Offsetdruck, Digitaldruck, Inkjet-Druck, Flexodruck, Zeitungsdruck, Buchdruck, Sublimationsdruck, Laserdruck, elektrophotographischer Druck oder einer Kombination dieser Druckverfahren gut bedruckbar.

### Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Die Feststoffgehalte werden bestimmt, indem eine definierte Menge der jeweiligen wässrigen Polymerisatdispersion (ca. 5 g) bei 140 °C in einem Trockenschrank bis zur Gewichtskonstanz getrocknet wird. Es werden jeweils zwei separate Messungen durchgeführt und der Mittelwert gebildet.

Die mittleren Teilchendurchmesser der Polymerteilchen werden durch dynamische Lichtstreuung an einer 0,005 bis 0,01 gew.-%igen wässrigen Polymerdispersion bei 23°C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

In den Beispielen wurden folgende Einsatzstoffe verwendet:

| | |
|---|---|
| C PUR^{®} 01910 | abgebaute Stärke; Mw 10540-12640; DE = 17-19; intrinsische Viskosität 0,054 dl/g |
| C*Sweet^{®} 01403 | abgebaute Stärke; Mw 4000-6000; DE =28-32; intrinsische Viskosität 0,026 dl/g |
| Dowfax^{®} 2A1: | Emulgator, Alkyldiphenyloxid-Disulfonat (45%ig in Wasser) |
| Saatlatex: | wässrige Polystyrolsaatdispersion mit einer mittleren Teilchengröße von 30 nm |

### Beispiel B1

Die Polymerdispersion wird hergestellt wie das Beispiel D23 der EP 536597, jedoch wird im Reaktor folgendes Gemisch vorgelegt:
213 g Wasser
33,75 g eines 33gew-%igen Saatlatex mit einer mittleren Teilchengröße von 30 nm
90 g C PUR^{®} 01910 (20 Gew-%)
63 g Zulauf 1 und
37 g Zulauf 2

### Zulauf 1:

247,5 g n-Butylacrylat (55 Gew.-%)
193,5 g Styrol (43 Gew.-%)
9 g Acrylsäure (2 Gew.-%)
voremulgiert in 173 g Wasser mit 4,5 g einer 20 gew.-%igen wässrigen Lösung eines Gemisches ethoxylierter Fettalkohole (EO-Grad: 18, C16/18) (0,2 Gew.-%)

### Zulauf 2:

2,25 g Natriumperoxidisulfat (0,5 Gew.-%) in 90 g Wasser

Erhalten wird eine im Wesentlichen koagulatfreie Polymerdispersion mit einem Feststoffgehalt von 50,4 % und einer Teilchengröße von 128 nm.

### Vergleichsbeispiel V1

Die Polymerdispersion wird hergestellt wie das Beispiel D23 der EP 536597. Erhalten wird eine im Wesentlichen koagulatfreie Polymerdispersion mit einem Feststoffgehalt von 50,3% und einer Teilchengröße von 225 nm.

### Beispiel B2

Im Reaktionsgefäß wird ein wie folgt zusammengesetztes Gemisch vorgelegt:
795 g Wasser
120 g C PUR^{®} 01910 (10 Gew-%)
109 g 33 gew-%iger Saatlatex mit einer mittleren Teilchengröße von 30 nm
13,7 g einer 7 gew-%igen wässrigen Lösung von Natriumperoxidisulfat

Das vorgelegte Gemisch wird auf 90°C erhitzt und 15 Minuten bei dieser Temperatur gehalten. Danach werden unter Aufrechterhaltung der 90°C zeitgleich beginnend die Restmengen der Zuläufe 1 und 2 kontinuierlich (Zulauf 1 innerhalb von 2,5h, Zulauf 2 innerhalb von 2h 45 min) der Reaktionszone zugeführt. Anschließend wird 15 Minuten nachpolymerisiert und auf Raumtemperatur abgekühlt.

### Zulauf 1:

659 g n-Butylacrylat (54,9 Gew-%)
491 g Styrol (40,9 Gew-%)
48 g Acrylsäure (4 Gew-%)
2,4 g Butandioladiacrylat (0,2 Gew-%)
voremulgiert in 305 g Wasser mit 36 g einer handelsüblichen 15 gew-%igen wässrigen Lösung von Natriumlaurylsulfat und 9,3 g Dowfax^{®} 2A1.

### Zulauf 2:

54,9 g einer 7 gew-%igen wässrigen Lösung von Natriumperoxidisulfat
Erhalten wird eine im Wesentlichen koagulatfreie Dispersion mit einem Feststoffgehalt von 49,6% und einer Teilchengröße von 126 nm.

### Vergleichsbeispiel V2

Ein Gemisch, bestehend aus:
833 g Wasser
120 g C PUR^{®} 01910 (10 Gew-%)
13,7 g einer 7 gew-%igen wässrigen Lösung von Natriumperoxidisulfat
wird auf 90°C erhitzt und 15 Minuten bei dieser Temperatur gehalten. Danach werden unter Aufrechterhaltung der 90°C zeitgleich beginnend die Restmengen der Zuläufe 1 und 2 kontinuierlich (Zulauf 1 innerhalb von 2,5h, Zulauf 2 innerhalb von 2h 45 min) der Reaktionszone zugeführt. Anschließend wurde 15 Minuten nachpolymerisiert und auf Raumtemperatur abgekühlt.

Zulauf 1 und Zulauf 2: wie in Beispiel B2.

Erhalten wird eine im Wesentlichen koagulatfreie Dispersion mit einem Feststoffgehalt von 50,1% und einer Teilchengröße von 255 nm.

### Beispiel B3

Im Reaktionsgefäß wird ein wie folgt zusammengesetztes Gemisch vorgelegt:
304 g Wasser
150 g C*Sweet^{®} 01403 (30 Gew-%)
20 g eines 33 gew-%igen Saatlatex mit einer mittleren Teilchengröße von 30 nm
35,7g einer 7 gew-%igen wässrigen Lösung von Itaconsäure (0,5 Gew-%)
21,4 g einer 7 gew-%igen wässrigen Lösung von Natriumperoxidisulfat

Das vorgelegte Gemisch wird auf 92°C erhitzt. Nach Temperaturerreichung wird unter Aufrechterhaltung der 90°C zeitgleich beginnend die Restmengen der Zuläufe 1 und 2 kontinuierlich (Zulauf 1 innerhalb von 3h, Zulauf 2 innerhalb von 3,5h) der Reaktionszone zugeführt. Anschließend wird 30 Minuten nachpolymerisiert und auf Raumtemperatur abgekühlt.

### Zulauf 1:

275 g n-Butylacrylat (55 Gew-%)
208 g Styrol (41,5 Gew-%)
15 g Acrylsäure (3Gew-%)
voremulgiert in 207 g Wasser mit 11 g Dowfax^{®} 2A1.

### Zulauf 2:

50 g einer 7 gew-%igen wässrigen Lösung von Natriumperoxidisulfat

Erhalten wurde eine im Wesentlichen koagulatfreie Dispersion mit einem Feststoffgehalt von 50,1% und einer Teilchengröße von 150 nm.

### Vergleichsbeispiel V3

Ein Gemisch, bestehend aus:
305 g Wasser
150 g C*Sweet^{®} 01403 (30 Gew-%)
35,7g einer 7 gew-%igen wässrigen Lösung von Itaconsäure (0,5 Gew-%)
21,4 g einer 7 gew-%igen wässrigen Lösung von Natriumperoxidisulfat
wird auf 92°C erhitzt. Nach Temperaturerreichung wird unter Aufrechterhaltung der 90°C zeitgleich beginnend die Restmengen der Zuläufe 1 und 2 kontinuierlich (Zulauf 1 innerhalb von 3h, Zulauf 2 innerhalb von 3,5h) der Reaktionszone zugeführt. Anschließend wird 30 Minuten nachpolymerisiert und auf Raumtemperatur abgekühlt.

Zulauf 1 und Zulauf 2: wie in Beispiel B3.

Erhalten wird eine im Wesentlichen koagulatfreie Dispersion mit einem Feststoffgehalt von 49,4% und einer Teilchengröße von 233 nm.

### Streichfarbenzubereitung:

Die Zubereitung der Streichfarbe erfolgt in einem Rühraggregat (Deliteur), in das die einzelnen Komponenten nacheinander zugeführt wurden. Die Pigmente werden in vordispergierter Form (als slurry) zugegeben. Die anderen Komponenten werden nach den Pigmenten zugegeben, wobei die Reihenfolge der Reihenfolge im angegebenen Streichfarbenrezept entspricht. Die Einstellung des Endfeststoffgehalts erfolgt durch die Zugabe von Wasser.

### Streichfarbenrezept:

70 Teile feinteiliges Carbonat
30 Teile feinteiliges Clay
10 Teile Streichfarbenbinder der Beispiele B1 bis B3 bzw. V1 bis V3
0,5 Teile Rheologiehilfsmittel (Carboxymethylcellulose)

### Streichen auf der Pilotanlage:

Die vorstehend beschriebenen Streichfarben werden auf der Pilotstreichanlage der BASF auf ein ungestrichenes holzfreies Rohpapier aufgetragen.

**Folgende Versuchsparameter werden gewählt:**

| | |
|---|---|
| Feststoffgehalt | 66% |
| Viskosität low shear | (Brookfield RVT, Spindel 4, 100 Upm): 1200 - 1500 mPa s |
| Auftragsverfahren: | Bladestreichverfahren |
| Rohpapier: | holzfrei, 70 g/m² |
| Auftragsmenge: | beidseitig je 10 g/m² |
| Trocknung: | mittels Heißluft und IR-Strahlern auf 4,5 % Restfeuchtigkeit |

Viskosität high shear (Thermo-Haake RS 600) bei 250.000 sec⁻¹: siehe Tabelle
Anpressdruck des Blades über den Anpressweg in mm: siehe Tabelle

Die gestrichenen Papiere werden anschließend kalandriert (90°C, 300 m/min, 200 kn/m Liniendruck) und für einen nachfolgenden Bogenoffsetdruckversuch auf das passende Druckmaschinenformat geschnitten.

### Messung der Trockenrupffestigkeit mit dem IGT-Probedruckgerät (IGT trocken):

Aus den zu prüfenden Papieren wurden Streifen geschnitten und mit dem IGT-Probedruckgerät bedruckt. Als Druckfarben werden spezielle Prüffarben der Fa. Lorillieux verwendet, die unterschiedliche Zugkräfte übertragen. Die Prüfstreifen werden mit kontinuierlich steigender Geschwindigkeit (maximale Geschwindigkeit 200 cm/s) durch das Druckwerk geführt. Bei der Auswertung wird auf dem Probedruckstreifen der Ort bestimmt, an dem nach Druckbeginn 10 Ausrisse aus der Papieroberfläche (Rupfpunkte) erfolgt sind. Als Maß für die Trockenrupffestigkeit wird die Geschwindigkeit in cm/sec angegeben, die an diesem Ort beim Bedrucken vorlag, sowie die verwendete Prüffarbe. Dabei wird die Qualität einer Papieroberfläche umso besser bewertet, je höher diese Druckgeschwindigkeit am zehnten Rupfpunkt ist.

### Offsettest:

Aus den zu prüfenden Papieren werden Proben mit einer Größe von 240 x 46 mm in der Längsrichtung ausgeschnitten. Auf die Einfärbewalze wird eine entsprechende Menge der Druckfarbe gegeben und 1 Minute laufen gelassen. Dann wird eine Druckscheibe eingesetzt und 30 s eingefärbt. Die Druckgeschwindigkeit beträgt 1 m/s. Ein Papierstreifen wird auf einen Druckprobeträger mit dem bedruckten Papierstreifen erneut in die Ausgangsstellung gebracht. Nach einer festgelegten Zeitspanne wird der Druckvorgang ohne Austausch der Druckscheibe erneut gestartet. Dieser Vorgang wird mehrmals wiederholt. Nach jedem Druckgang wird das Rupfen auf der bedruckten Seite des Papierstreifens visuell begutachtet. In der Tabelle ist die Anzahl der Durchgänge angegeben bis zum ersten Mal ein Rupfen auftrat. Je höher die Anzahl der Durchgänge bis zum Auftreten des Rupfens, desto besser ist die Eignung der Papiere für den Offsetdruck.

### Bestimmung der Viskosität von Papierstreichmassen bei hoher Scherung:

Die Viskosität der Papierstreichmassen wird in einem Haake-Viskosimeter (Thermo-Haake RS 600) bei einem Schergefälle von 250000/s und einer Temperatur von 23°C gemessen. Die Angabe der Viskosität erfolgt in mPa s.

**Tabelle 1**

| Dispersion | Teilchengröße [nm] | Trockenrupf festigkeit [cm/s] | Offsettdurchgänge | Viskosität bei hoher Scherung [mPa s] | Rakeldruck in mm Anpressweg |
|---|---|---|---|---|---|
| B1 | 128 | 110 | 6 | 75 | 5 |
| V1 | 225 | 62 | 3 | 121 | 10 |
| B2 | 126 | 139 | >6 | 80 | 4 |
| V2 | 255 | 75 | 2 | 130 | 11 |
| B3 | 150 | 115 | 5 | 79 | 5 |
| V3 | 233 | 82 | 3 | 125 | 10 |

Streichfarben, hergestellt mit den erfindungsgemäßen Polymerdispersionen B1, B2 und B3 zeigen gegenüber Streichfarben, hergestellt mit den Vergleichsdispersionen V1, V2 und V3 deutliche Vorteile hinsichtlich Trockenrupffestigkeit, Offsetdurchgängen, Viskosität bei hoher Scherung und Rakeldruck.

US Provisional/Patent Application No. 611354268, eingereicht am 14.06.2010, ist eingefügt in die vorliegende Anmeldung durch Literaturhinweis. Im Hinblick auf die oben genannten Lehren sind zahlreiche Änderungen und Abweichungen von der vorliegenden Erfindung möglich. Man kann deshalb davon ausgehen, dass die Erfindung, im Rahmen der beigefügten Ansprüche, anders als hierin spezifisch beschrieben, ausgeführt werden kann.

## Patentansprüche

1. Wässrige Polymerdispersion, die erhältlich ist durch radikalisch initiierte Emulsionspolymerisation von
(a) 19,9 bis 80 Gew.-Teilen mindestens einer vinylaromatischen Verbindung,
(b) 19,9 bis 80 Gew.-Teilen mindestens eines Acrylatmonomers ausgewählt aus C1- bis C10-Alkylacrylaten und C1- bis C10-Alkylmethacrylaten,
(c) 0,1 bis 10 Gew.-Teilen mindestens einer ethylenisch ungesättigten Säure und
(d) 0 bis 20 Gew.-Teilen mindestens eines anderen ethylenisch ungesättigten Monomeren,
wobei die Summe der Gew.-Teile der Monomeren (a), (b), (c) und (d) 100 beträgt,
und wobei die Emulsionspolymerisation in wässrigem Medium in Gegenwart von Radikale bildenden Initiatoren, Saatlatex sowie mindestens einer Kohlenhydratverbindung in Form einer abgebauten Stärke erfolgt,
wobei der Saatlatex in einer Menge von 0,1 bis 4 Gew.% bezogen auf die Gesamtmenge an Monomeren eingesetzt wird,
wobei der Saatlatex eine Polystyrol-Polymersaat oder eine Polymethylmethacrylat-Polymersaat ist.

2. Wässrige Polymerdispersion nach Anspruch 1, **dadurch gekennzeichnet, dass** die Polymerisatteilchen eine mittlere Teilchengröße von 80 bis 160 nm aufweisen.

3. Wässrige Polymerdispersion nach einem der vorhergehenden Ansprüche, **dadurch gekennzeichnet, dass** die Kohlenhydratverbindung ausgewählt ist aus abgebauten Stärken mit einer intrinsischen Viskosität ηᵢ von weniger als 0,07 dl/g, vorzugsweise von 0,02 bis 0,06 dl/g.

4. Wässrige Polymerdispersion nach einem der vorhergehenden Ansprüche, **dadurch gekennzeichnet, dass** die vinylaromatische Verbindung ausgewählt ist aus Styrol, Methylstyrol und deren Gemisch, und/oder die Acrylatmonomere ausgewählt sind aus Methylacrylat, Ethylacrylat, n-Butylacrylat, Ethylhexylacrylat, Propylheptylacrylat und deren Gemisch und/oder die ethylenisch ungesättigte Säure ausgewählt ist aus einer oder mehrerer Verbindungen der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat, Vinylphosphonsäure und Salzen dieser Säuren.

5. Wässrige Polymerdispersion nach einem der vorhergehenden Ansprüche, **dadurch gekennzeichnet, dass** der Saatlatex Polystyrolsaat mit einem mittleren Teilchendurchmesser von 20 bis 40 nm ist.

6. Wässrige Polymerdispersion nach einem der vorhergehenden Ansprüche, **dadurch gekennzeichnet, dass** bei der Emulsionspolymerisation
(a) 25 bis 70 Gew.-Teile Styrol und/oder Methylstyrol,
(b) 25 bis 70 Gew.-Teile mindestens eines Acrylatmonomers ausgewählt aus C1- bis C8-Alkylacrylaten,
(c) 1 bis 6 Gew.-Teile mindestens einer ethylenisch ungesättigten Säure ausgewählt aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat und Sulfopropylmethacrylat und
(d) 0 bis 20 Gew.-Teilen mindestens eines anderen ethylenisch ungesättigten Monomeren, eingesetzt werden, wobei die Summe der Gew.-Teile der Monomeren (a), (b), (c) und (d) 100 beträgt.

7. Wässrige Polymerdispersion nach einem der vorhergehenden Ansprüche, **dadurch gekennzeichnet, dass** bei der Emulsionspolymerisation 15 bis 60 Gew.-Teile der Kohlenhydratverbindung auf 100 Gew.-Teile der Monomeren eingesetzt werden.

8. Wässrige Polymerdispersion nach einem der vorhergehenden Ansprüche, **dadurch gekennzeichnet, dass** das Acrylatmonomer n-Butylacrylat ist.

9. Verwendung der wässrigen Polymerdispersion nach einem der vorhergehenden Ansprüche als Bindemittel, Klebstoff, Schlichtemittel für Fasern, zur Herstellung von Überzügen oder zur Herstellung von Papierstreichmassen.

10. Verfahren zur Herstellung von wässrigen Polymerdispersionen auf Basis von Copolymerisaten aus Vinylaromaten und Acrylatmonomeren durch Emulsionspolymerisation der Monomeren in wässrigem Medium in Gegenwart einer Kohlenhydratverbindung und von Radikale bildenden Initiatoren, **dadurch gekennzeichnet, dass** man bei der radikalisch initiierten Emulsionspolymerisation
(a) 19,9 bis 80 Gew.-Teile mindestens einer vinylaromatischen Verbindung,
(b) 19,9 bis 80 Gew.-Teile mindestens eines Acrylatmonomers ausgewählt aus C1- bis C10-Alkylacrylaten und C1- bis C10-Alkylmethacrylaten,
(c) 0,1 bis 10 Gew.-Teile mindestens einer ethylenisch ungesättigten Säure und
(d) 0 bis 20 Gew.-Teile mindestens eines anderen ethylenisch ungesättigten Monomeren,
wobei die Summe der Gew.-Teile der Monomeren (a), (b), (c) und (d) 100 beträgt, einsetzt,
und wobei die Emulsionspolymerisation in wässrigem Medium in Gegenwart von Radikale bildenden Initiatoren, Saatlatex sowie mindestens einer Kohlenhydratverbindung in Form einer abgebauten Stärke erfolgt,
wobei der Saatlatex in einer Menge von 0,1 bis 4 Gew.% bezogen auf die Gesamtmenge an Monomeren eingesetzt wird,
wobei der Saatlatex eine Polystyrol-Polymersaat oder eine Polymethylmethacrylat-Polymersaat ist.

11. Verfahren nach dem vorhergehenden Anspruch, **dadurch gekennzeichnet, dass** mindestens 0,9 Gew.-%, bezogen auf die insgesamt eingesetzten Monomeren, an Initiatoren eingesetzt werden, wobei mindestens 15 Gew.-% der Initiatoren zusammen mit der Kohlenhydratverbindung und dem Saatlatex in dem wässrigen Medium vorgelegt und die Monomeren sowie die restlichen Initiatoren unter Polymerisationsbedingungen in diese Vorlage dosiert werden.

12. Verfahren nach einem der beiden vorhergehenden Ansprüche, **dadurch gekennzeichnet, dass** die Kohlenhydratverbindung ausgewählt ist aus abgebauten Stärken mit einer intrinsischen Viskosität ηᵢ von weniger als 0,07 dl/g, vorzugsweise von 0,02 bis 0,06 dl/g.

13. Verfahren nach einem der vorhergehenden Verfahrensansprüche, **dadurch gekennzeichnet, dass** die vinylaromatische Verbindung ausgewählt ist aus Styrol, Methylstyrol und deren Gemisch, und/oder die Acrylatmonomere ausgewählt sind aus Methylacrylat, Ethylacrylat, n-Butylacrylat, Ethylhexylacrylat, Propylheptylacrylat und deren Gemisch und/oder die ethylenisch ungesättigte Säure ausgewählt ist aus einer oder mehrerer Verbindungen der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat, Vinylphosphonsäure und Salzen dieser Säuren.

14. Verfahren nach einem der vorhergehenden Verfahrensansprüche, **dadurch gekennzeichnet, dass** der Saatlatex Polystyrolsaat mit einem mittleren Teilchendurchmesser von 20 bis 40 nm ist.

15. Verfahren nach einem der vorhergehenden Verfahrensansprüche, **dadurch gekennzeichnet, dass** bei der Emulsionspolymerisation
(a) 25 bis 70 Gew.-Teile Styrol und/oder Methylstyrol,
(b) 25 bis 70 Gew.-Teile mindestens eines Acrylatmonomers ausgewählt aus C1- bis C8-Alkylacrylaten,
(c) 1 bis 6 Gew.-Teile mindestens einer ethylenisch ungesättigten Säure ausgewählt aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat und Sulfopropylmethacrylat und
(d) 0 bis 20 Gew.-Teilen mindestens eines anderen ethylenisch ungesättigten Monomeren, eingesetzt werden, wobei die Summe der Gew.-Teile der Monomeren (a), (b), (c) und (d) 100 beträgt.

16. Verfahren nach einem der vorhergehenden Verfahrensansprüche, **dadurch gekennzeichnet, dass** bei der Emulsionspolymerisation 15 bis 60 Gew.-Teile der Kohlenhydratverbindung auf 100 Gew.-Teile der Monomeren eingesetzt werden.

17. Verfahren nach einem der vorhergehenden Verfahrensansprüche, **dadurch gekennzeichnet, dass** man als Initiator Natriumpersulfat, Kaliumpersulfat, Ammoniumpersulfat, Natriumperoxodisulfat, Kaliumperoxodisulfat und/oder Ammoniumperoxodisulfat einsetzt.

18. Verfahren nach einem der vorhergehenden Verfahrensansprüche, **dadurch gekennzeichnet, dass** das Acrylatmonomer n-Butylacrylat ist.

19. Papierstreichmasse enthaltend
(i) anorganische Pigmente und
(ii) eine wässrige Polymerdispersion nach einem der Ansprüche 1 bis 8.

20. Papierstreichmasse nach dem vorhergehenden Anspruch, **dadurch gekennzeichnet, dass** die Polymerisate der wässrigen Polymerdispersion in einer Menge von 1 bis 50 Gew.-Teilen, bezogen auf die Gesamtmenge an Pigmenten, eingesetzt werden und dass die Pigmente in einer Menge von 80 bis 95 Gewichtsteilen, bezogen auf den Gesamtfeststoffgehalt, enthalten sind und ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und dass die Papierstreichmasse zusätzlich mindestens einen Hilfsstoff enthält, ausgewählt aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

21. Mit einer Papierstreichmasse gemäß einem der beiden vorhergehenden Ansprüche beschichtetes Papier oder Karton.

22. Verfahren zum Streichen von Papier oder Karton, wobei
- eine wässrige Polymerdispersion nach einem der Ansprüche 1 bis 8 zur Verfügung gestellt wird; und
- mit der wässrigen Polymerdispersion, mindestens einem Pigment und optionalen weiteren Hilfsstoffen eine Papierstreichmasse hergestellt wird; und
- die Papierstreichmasse auf mindestens eine Oberfläche von Papier oder Karton aufgebracht wird.

## Claims

1. An aqueous polymer dispersion obtainable by free-radically initiated emulsion polymerization of
(a) 19.9 to 80 parts by weight of at least one vinylaromatic compound,
(b) 19.9 to 80 parts by weight of at least one acrylate monomer selected from C1-C10 alkyl acrylates and C1-C10 alkyl methacrylates,
(c) 0.1 to 10 parts by weight of at least one ethylenically unsaturated acid, and
(d) 0 to 20 parts by weight of at least one other ethylenically unsaturated monomer,
wherein the sum total of the parts by weight of monomers (a), (b), (c) and (d) is 100,
and wherein the emulsion polymerization is effected in an aqueous medium in the presence of free-radical initiators, seed latex and also at least one carbohydrate compound in the form of a degraded starch,
wherein the seed latex is used in an amount of 0.1% to 4% by weight, based on the total amount of monomers,
wherein the seed latex is a polystyrene polymer seed or a polymethylmethacrylate polymer seed.

2. The aqueous polymer dispersion according to claim 1 wherein the polymer particles have an average particle size in the range from 80 to 160 nm.

3. The aqueous polymer dispersion according to either of the preceding claims wherein the carbohydrate compound is selected from degraded starches having an intrinsic viscosity ηᵢ of less than 0.07 dl/g and preferably in the range from 0.02 to 0.06 dl/g.

4. The aqueous polymer dispersion according to any preceding claim wherein the vinylaromatic compound is selected from styrene, methylstyrene and their mixture, and/or the acrylate monomers are selected from methyl acrylate, ethyl acrylate, n-butyl acrylate, ethylhexyl acrylate, propylheptyl acrylate and their mixture, and/or the ethylenically unsaturated acid is selected from one or more compounds of the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate, vinylphosphonic acid and salts thereof.

5. The aqueous polymer dispersion according to any preceding claim wherein the seed latex is polystyrene seed having an average particle diameter of 20 to 40 nm.

6. The aqueous polymer dispersion according to any preceding claim wherein the emulsion polymerization utilizes
(a) 25 to 70 parts by weight of styrene and/or of methylstyrene,
(b) 25 to 70 parts by weight of at least one acrylate monomer selected from C1-C8 alkyl acrylates,
(c) 1 to 6 parts by weight of at least one ethylenically unsaturated acid selected from acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate and sulfopropyl methacrylate, and
(d) 0 to 20 parts by weight of at least one other ethylenically unsaturated monomer,
wherein the sum total of the parts by weight of monomers (a), (b), (c) and (d) is 100.

7. The aqueous polymer dispersion according to any preceding claim wherein the emulsion polymerization utilizes from 15 to 60 parts by weight of the carbohydrate compound per 100 parts by weight of the monomers.

8. The aqueous polymer dispersion according to any preceding claim wherein the acrylate monomer is n-butyl acrylate.

9. The use of the aqueous polymer dispersion according to any preceding claim as a binder, as an adhesive, as a sizing agent for fibers, in the manufacture of coatings or in the manufacture of paper coating slips.

10. A process for preparing aqueous polymer dispersions based on copolymers of vinylaromatics and acrylate monomers by emulsion polymerization of the monomers in an aqueous medium in the presence of a carbohydrate compound and of free-radical initiators, which process comprises the free-radically initiated emulsion polymerization utilizing
(a) 19.9 to 80 parts by weight of at least one vinylaromatic compound,
(b) 19.9 to 80 parts by weight of at least one acrylate monomer selected from C1-C10 alkyl acrylates and C1-C10 alkyl methacrylates,
(c) 0.1 to 10 parts by weight of at least one ethylenically unsaturated acid, and
(d) 0 to 20 parts by weight of at least one other ethylenically unsaturated monomer,
wherein the sum total of the parts by weight of monomers (a), (b), (c) and (d) is 100,
and wherein the emulsion polymerization is effected in an aqueous medium in the presence of free-radical initiators, seed latex and also at least one carbohydrate compound in the form of a degraded starch,
wherein the seed latex is used in an amount of 0.1% to 4% by weight, based on the total amount of monomers,
wherein the seed latex is a polystyrene polymer seed or a polymethylmethacrylate polymer seed.

11. The process according to the preceding claim wherein at least 0.9% by weight, based on total monomers used, of initiators is used and wherein at least 15% by weight of the initiators are initially charged in the aqueous medium together with the carbohydrate compound and the seed latex and the monomers and also the residual initiators are metered into this initial charge under polymerization conditions.

12. The process according to either of the two preceding claims wherein the carbohydrate compound is selected from degraded starches having an intrinsic viscosity ηᵢ of less than 0.07 dl/g and preferably in the range from 0.02 to 0.06 dl/g.

13. The process according to any preceding process claim wherein the vinylaromatic compound is selected from styrene, methylstyrene and their mixture, and/or the acrylate monomers are selected from methyl acrylate, ethyl acrylate, n-butyl acrylate, ethylhexyl acrylate, propylheptyl acrylate and their mixture, and/or the ethylenically unsaturated acid is selected from one or more compounds of the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate, vinylphosphonic acid and salts thereof.

14. The process according to any preceding process claim wherein the seed latex is polystyrene seed having an average particle diameter of 20 to 40 nm.

15. The process according to any preceding process claim wherein the emulsion polymerization utilizes
(a) 25 to 70 parts by weight of styrene and/or of methylstyrene,
(b) 25 to 70 parts by weight of at least one acrylate monomer selected from C1-C8 alkyl acrylates,
(c) 1 to 6 parts by weight of at least one ethylenically unsaturated acid selected from acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate and sulfopropyl methacrylate, and
(d) 0 to 20 parts by weight of at least one other ethylenically unsaturated monomer,
wherein the sum total of the parts by weight of monomers (a), (b), (c) and (d) is 100.

16. The process according to any preceding process claim wherein the emulsion polymerization utilizes from 15 to 60 parts by weight of the carbohydrate compound per 100 parts by weight of the monomers.

17. The process according to any preceding process claim wherein sodium persulfate, potassium persulfate, ammonium persulfate, sodium peroxodisulfate, potassium peroxodisulfate and/or ammonium peroxodisulfate is or are used as initiator.

18. The process according to any preceding process claim wherein the acrylate monomer is n-butyl acrylate.

19. A paper coating slip comprising
(i) inorganic pigments, and
(ii) an aqueous polymer dispersion according to any one of claims 1 to 8.

20. The paper coating slip according to the preceding claim wherein the polymers of the aqueous polymer dispersion are used in an amount of 1 to 50 parts by weight, based on the total amount of pigments, and wherein the pigments are present in an amount of 80 to 95 parts by weight, based on the total solids content and are selected from the group consisting of calcium sulfate, calcium aluminate sulfate, barium sulfate, magnesium carbonate, calcium carbonate, silicas, aluminas, aluminum hydrate, silicates, titanium dioxide, zinc oxide, kaolin, argillaceous earth, talc and silicon dioxide, and wherein the paper coating slip further comprises at least one auxiliary selected from the group consisting of thickeners, further polymeric binders, co-binders, optical brighteners, fillers, flow control agents, dispersants, surfactants, lubricants, neutralizing agents, defoamers, deaerators, preservatives and dyes.

21. Paper or card coated with a paper coating slip according to either of the two preceding claims.

22. A process for coating paper or card, which comprises
- providing an aqueous polymer dispersion according to any one of claims 1 to 8; and
- using the aqueous polymer dispersion, at least one pigment and optional further auxiliaries to prepare a paper coating slip; and
- applying the paper coating slip to at least one surface of paper or card.

## Revendications

1. Dispersion aqueuse de polymères, qui peut être obtenue par polymérisation en émulsion initiée radicalairement de
(a) 19,9 à 80 parties en poids d'au moins un composé aromatique de vinyle,
(b) 19,9 à 80 parties en poids d'au moins un monomère d'acrylate choisi parmi les acrylates d'alkyle en C1 à C10 et les méthacrylates d'alkyle en C1 à C10,
(c) 0,1 à 10 parties en poids d'au moins un acide éthyléniquement insaturé et
(d) 0 à 20 parties en poids d'au moins un autre monomère éthyléniquement insaturé,
la somme des parties en poids des monomères (a), (b), (c) et (d) étant de 100,
et la polymérisation en émulsion ayant lieu dans un milieu aqueux en présence d'initiateurs formant des radicaux, d'un latex germe ainsi que d'au moins un composé glucide sous la forme d'un amidon décomposé,
le latex germe étant utilisé en une quantité de 0,1 à 4 % en poids par rapport à la quantité totale de monomères,
le latex germe étant un germe de polymère de polystyrène ou un germe de polymère de poly(méthacrylate de méthyle).

2. Dispersion aqueuse de polymères selon la revendication 1, **caractérisée en ce que** les particules polymères présentent une taille moyenne de particule de 80 à 160 nm.

3. Dispersion aqueuse de polymères selon l'une quelconque des revendications précédentes, **caractérisée en ce que** le composé glucide est choisi parmi les amidons décomposés ayant une viscosité intrinsèque ηᵢ inférieure à 0,07 dl/g, de préférence de 0,02 à 0,06 dl/g.

4. Dispersion aqueuse de polymères selon l'une quelconque des revendications précédentes, **caractérisée en ce que** le composé aromatique de vinyle est choisi parmi le styrène, le méthylstyrène et leur mélange, et/ou les monomères d'acrylate sont choisis parmi l'acrylate de méthyle, l'acrylate d'éthyle, l'acrylate de n-butyle, l'acrylate d'éthylhexyle, l'acrylate de propylheptyle et leur mélange, et/ou l'acide éthyléniquement insaturé est choisi parmi un ou plusieurs composés du groupe constitué par l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrènesulfonique, l'acide acrylamidométhylpropanesulfonique, l'acrylate de sulfopropyle, le méthacrylate de sulfopropyle, l'acide vinylphosphonique et les sels de ces acides.

5. Dispersion aqueuse de polymères selon l'une quelconque des revendications précédentes, **caractérisée en ce que** le latex germe est un germe de polystyrène d'un diamètre moyen de particule de 20 à 40 nm.

6. Dispersion aqueuse de polymères selon l'une quelconque des revendications précédentes, **caractérisée en ce que**, lors de la polymérisation en émulsion,
(a) 25 à 70 parties en poids de styrène et/ou de méthylstyrène,
(b) 25 à 70 parties en poids d'au moins un monomère d'acrylate choisi parmi les acrylates d'alkyle en C1 à C8,
(c) 1 à 6 parties en poids d'au moins un acide éthyléniquement insaturé choisi parmi l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrènesulfonique, l'acide acrylamidométhylpropanesulfonique, l'acrylate de sulfopropyle et le méthacrylate de sulfopropyle, et
(d) 0 à 20 parties en poids d'au moins un autre monomère éthyléniquement insaturé,
sont utilisées, la somme des parties en poids des monomères (a), (b), (c) et (d) étant de 100.

7. Dispersion aqueuse de polymères selon l'une quelconque des revendications précédentes, **caractérisée en ce que**, lors de la polymérisation en émulsion, 15 à 60 parties en poids du composé glucide pour 100 parties en poids des monomères, sont utilisées.

8. Dispersion aqueuse de polymères selon l'une quelconque des revendications précédentes, **caractérisée en ce que** le monomère d'acrylate est l'acrylate de n-butyle.

9. Utilisation de la dispersion aqueuse de polymères selon l'une quelconque des revendications précédentes en tant que liant, adhésif, agent d'encollage pour fibres, pour la fabrication de revêtements ou pour la fabrication de sauces de couchage pour papier.

10. Procédé de fabrication de dispersions aqueuses de polymères à base de copolymères de composés aromatiques de vinyle et de monomères d'acrylate par polymérisation en émulsion des monomères dans un milieu aqueux en présence d'un composé glucide et d'initiateurs formant des radicaux, **caractérisé en ce que**, lors de la polymérisation en émulsion initiée radicalairement,
(a) 19,9 à 80 parties en poids d'au moins un composé aromatique de vinyle,
(b) 19,9 à 80 parties en poids d'au moins un monomère d'acrylate choisi parmi les acrylates d'alkyle en C1 à C10 et les méthacrylates d'alkyle en C1 à C10,
(c) 0,1 à 10 parties en poids d'au moins un acide éthyléniquement insaturé et
(d) 0 à 20 parties en poids d'au moins un autre monomère éthyléniquement insaturé,
sont utilisées, la somme des parties en poids des monomères (a), (b), (c) et (d) étant de 100 et la polymérisation en émulsion ayant lieu dans un milieu aqueux en présence d'initiateurs formant des radicaux, d'un latex germe et d'au moins un composé glucide sous la forme d'un amidon décomposé,
le latex germe étant utilisé en une quantité de 0,1 à 4 % en poids par rapport à la quantité totale de monomères,
le latex germe étant un germe de polymère de polystyrène ou un germe de polymère de poly(méthacrylate de méthyle).

11. Procédé selon la revendication précédente, **caractérisé en ce qu'**au moins 0,9 % en poids, par rapport aux monomères utilisés au total, d'initiateurs sont utilisés, au moins 15 % en poids des initiateurs étant chargés initialement dans le milieu aqueux avec le composé glucide et le latex germe, et les monomères et les initiateurs restants étant ajoutés à cette charge initiale dans des conditions de polymérisation.

12. Procédé selon l'une quelconque des deux revendications précédentes, **caractérisé en ce que** le composé glucide est choisi parmi les amidons décomposés ayant une viscosité intrinsèque ηᵢ inférieure à 0,07 dl/g, de préférence de 0,02 à 0,06 dl/g.

13. Procédé selon l'une quelconque des revendications de procédé précédentes, **caractérisé en ce que** le composé aromatique de vinyle est choisi parmi le styrène, le méthylstyrène et leur mélange, et/ou les monomères d'acrylate sont choisis parmi l'acrylate de méthyle, l'acrylate d'éthyle, l'acrylate de n-butyle, l'acrylate d'éthylhexyle, l'acrylate de propylheptyle et leur mélange, et/ou l'acide éthyléniquement insaturé est choisi parmi un ou plusieurs composés du groupe constitué par l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrènesulfonique, l'acide acrylamidométhylpropanesulfonique, l'acrylate de sulfopropyle, le méthacrylate de sulfopropyle, l'acide vinylphosphonique et les sels de ces acides.

14. Procédé selon l'une quelconque des revendications de procédé précédentes, **caractérisé en ce que** le latex germe est un germe de polystyrène d'un diamètre moyen de particule de 20 à 40 nm.

15. Procédé selon l'une quelconque des revendications de procédé précédentes, **caractérisé en ce que**, lors de la polymérisation en émulsion,
(a) 25 à 70 parties en poids de styrène et/ou de méthylstyrène,
(b) 25 à 70 parties en poids d'au moins un monomère d'acrylate choisi parmi les acrylates d'alkyle en C1 à C8,
(c) 1 à 6 parties en poids d'au moins un acide éthyléniquement insaturé choisi parmi l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrènesulfonique, l'acide acrylamidométhylpropanesulfonique, l'acrylate de sulfopropyle et le méthacrylate de sulfopropyle, et
(d) 0 à 20 parties en poids d'au moins un autre monomère éthyléniquement insaturé,
sont utilisées, la somme des parties en poids des monomères (a), (b), (c) et (d) étant de 100.

16. Procédé selon l'une quelconque des revendications de procédé précédentes, **caractérisé en ce que**, lors de la polymérisation en émulsion, 15 à 60 parties en poids du composé glucide pour 100 parties en poids des monomères, sont utilisées.

17. Procédé selon l'une quelconque des revendications de procédé précédentes, **caractérisé en ce que** le persulfate de sodium, le persulfate de potassium, le persulfate d'ammonium, le peroxodisulfate de sodium, le peroxodisulfate de potassium et/ou le peroxodisulfate d'ammonium sont utilisés en tant qu'initiateur.

18. Procédé selon l'une quelconque des revendications de procédé précédentes, **caractérisé en ce que** le monomère d'acrylate est l'acrylate de n-butyle.

19. Sauce de couchage pour papier, contenant :
(i) des pigments inorganiques et
(ii) une dispersion aqueuse de polymères selon l'une quelconque des revendications 1 à 8.

20. Sauce de couchage pour papier selon la revendication précédente, **caractérisée en ce que** les polymères de la dispersion aqueuse de polymères sont utilisés en une quantité de 1 à 50 parties en poids, par rapport à la quantité totale de pigments, et **en ce que** les pigments sont contenus en une quantité de 80 à 95 parties en poids, par rapport à la teneur en solides totale, et sont choisis dans le groupe constitué par le sulfate de calcium, l'aluminate-sulfate de calcium, le sulfate de baryum, le carbonate de magnésium, le carbonate de calcium, les silices, les oxydes d'aluminium, l'hydrate d'aluminium, les silicates, le dioxyde de titane, l'oxyde de zinc, le kaolin, les argiles, le talc et le dioxyde de silicium, et **en ce que** la sauce de couchage pour papier contient en outre au moins un adjuvant choisi dans le groupe constitué par les épaississants, les autres liants polymères, les co-liants, les azurants optiques, les charges, les adjuvants d'écoulement, les dispersants, les tensioactifs, les lubrifiants, les agents de neutralisation, les démousseurs, les agents d'aération, les conservateurs et les colorants.

21. Papier ou carton revêtu avec une sauce de couchage pour papier selon l'une quelconque des deux revendications précédentes.

22. Procédé d'enduction de papier ou de carton, selon lequel
- une dispersion aqueuse de polymères selon l'une quelconque des revendications 1 à 8 est préparée ; et
- une sauce de couchage pour papier est fabriquée avec la dispersion aqueuse de polymères, au moins un pigment et éventuellement d'autres adjuvants ; et
- la sauce de couchage pour papier est appliquée sur au moins une surface d'un papier ou d'un carton.
